(19) Europäisches Patentamt
European Patent Office
Office européen des brevets

(11) EP 0 654 654 B1

(12) EUROPÄISCHE PATENTSCHRIFT

(45) Veröffentlichungstag und Bekanntmachung des Hinweises auf die Patenterteilung:
11.03.1998 Patentblatt 1998/11

(51) Int Cl.⁶: **G01G 19/02**, G01G 19/07, G01G 3/13

(21) Anmeldenummer: 94110307.9

(22) Anmeldetag: 02.07.1994

(54) **Hohlprofil-Aufnehmer zum Einbau in Fahrbahnen**

Hollow section transducer for installation in roadways

Capteur à profile creux incorporable dans les chaussées

(84) Benannte Vertragsstaaten:
AT BE DE FR GB IT NL SE

(30) Priorität: 23.11.1993 CH 3482/93

(43) Veröffentlichungstag der Anmeldung:
24.05.1995 Patentblatt 1995/21

(73) Patentinhaber: K.K. HOLDING AG
CH-8408 Winterthur (CH)

(72) Erfinder:
• Calderara Reto
CH-8312 Winterberg (CH)
• Jahreiss, Lothar, Dr.
CH-8038 Zürich (CH)
• Sonderegger, H.C.
CH-8413 Neftenbach (CH)
• Caprez, Markus, Dr.
CH-8049 Zürich (CH)

(56) Entgegenhaltungen:
EP-A- 0 491 655          US-A- 3 535 923
US-A- 4 702 329          US-A- 4 799 381

• MEASUREMENT AND CONTROL, Bd.26, Nr.2, März 1993, LONDON GB Seiten 45 - 47, XP361935 J.BOBY ET AL. 'Vehicle weighing in motion with fibre optic sensors'

## Beschreibung

Die Erfindung betrifft einen Hohlprofil-Aufnehmer, der in Fahrbahn-Oberflächen eingebaut wird und zur dynamischen Erfassung der Reaktionskräfte auf die Fahrbahn sowie von Geschwindigkeiten und weiteren Messgrössen dient. Sie betrifft weiter Anwendungen und Kalibrier verfahren.

Die Erfindung geht aus vom Stand der Technik nach EP- Anmeldung 0 491 655 A1 vom 13. November 1991. In dieser Anmeldung ist ein rohrförmiger Aufnehmer dargestellt, der eine elastisch vorgespannte Messanordnung aus piezoelektrischen Platten, z.B. aus Quarz, enthält. Dieser Rohraufnehmer wird in einer ca. 50 mm tiefen Nute in die Strassenoberfläche verlegt und mit einer Kunststoff-/Sand-Verbindung eingegossen.

Die Erfindung bezweckt Anordnungen der vorliegenden Art so zu verbessern, dass wesentlich zuverlässigere Messsignale erhalten werden, wodurch insbesondere eine genauere automatische Computerauswertung ermöglicht wird. Zudem hat die zusätzliche Möglichkeit der Messung von Schubkräften eine neue Dimension der Erfindung gebracht.

Die Hauptelemente der Erfindung sollen nun anhand von 17 Figuren näher erläutert werden.

Fig. 1    zeigt den Stand der Technik,

Fig. 2    zeigt eine Ausführungsform der Erfindung im Querschnitt,

Fig. 3    zeigt eine Ausführungsform des erfindungsgemässen Aufnehmers im eingebauten Zustand,

Fig. 4    zeigt eine Ausführungsform der Erfindung für Schubkraftmessung im Einbauzustand,

Fig. 5    zeigt eine Ausführungsform der Erfindung für kombinierte Radlast- und Schubkraftmessung im Einbau,

Fig. 6    zeigt den erfindungsgemässen Aufnehmer,

Fig. 7    zeigt den erfindungsgemässen Aufnehmer einbaufertig,

Fig. 8    zeigt eine gedruckte Schaltungsanordnung mit hintereinander angeordneten Druck- und Schub-Piezokristallen,

Fig. 9    zeigt eine ähnliche Schaltung mit übereinander angeordneten Druck- und Schub-Piezokristallen,

Fig. 10    zeigt eine Aufnehmer-Anordnung im Längsschnitt verlegt in Fahrbahnoberfläche,

Fig. 11    zeigt eine Mehrfach-Aufnehmer-Anordnung für Testfahrzeuge einer Prüfstrecke,

Fig. 12    zeigt eine Prüfstrecke wie Fig. 11 in Grundriss und Aufriss,

Fig. 13    zeigt eine Auswerte-Variante der Fahrzeugfederung,

Fig. 14    zeigt eine weitere Auswerte-Variante mit Schubresultaten,

Fig. 15    zeigt eine Mehrfach-Aufnehmer-Anordnung in einer Flugzeugpiste im Schnitt,

Fig. 16    zeigt die Anordnung von Fig. 15 im Grundriss,

Fig. 17    zeigt eine der Auswerte-Varianten von Bremsschubwerten der Einzelräder.

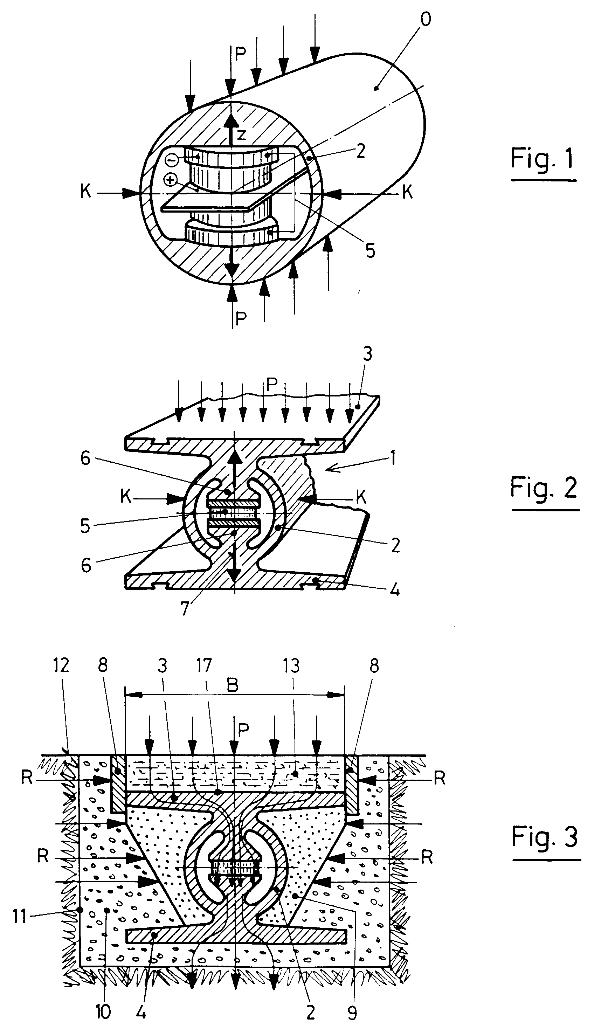

In Fig. 1 ist der Stand der Technik gemäss EP-Anmeldung 0 491 655 A1 dargestellt mit dem Rohraufnehmer 0 mit der Messanordnung 5, die im Rohrteil 2 eingebaut ist.

Fig. 2 zeigt einen erfindungsgemässen Aufnehmer ausgebildet als Rohrflansch-Aufnehmer 1 bestehend aus Rohrteil 2, Kraft-einleitflansch 3, Kraftverankerungsflansch 4 und Messanordnung 5. Zur Montage durch Einschieben der Messanordnung 5 wird der Rohrflansch-Aufnehmer mit der Klemmkraft K seitlich gepresst, wodurch sich die Halterungen 6 der Messanordnung 5 in Richtung der Pfeile 7 bewegen und sich eine Oeffnung ergibt. Nach Loslösen von K ist die Messanordnung 5 unter hoher elastischer Vorspannung ohne jede Spaltwirkung eingebaut.

Gegenüber dem Stand der Technik bringt der erfindungsgemässe integrale Kraft-Einleitungsflansch 3 eine Konzentration der Kraftlinien P auf die Messanordnung 5, wodurch eine markante Verbesserung der Signalqualität und eine mechanische Verstärkerwirkung erhalten wird.
Der Rohrflansch-Aufnehmer 1 zeichnet sich zudem durch eine wesentlich vergrösserte Elastizität des Rohrteils 2 aus dank der bis in den Bereich der Verbindungsstelle mit dem Flansch 3 hochgezogenen Wand des Rohrteils 2.

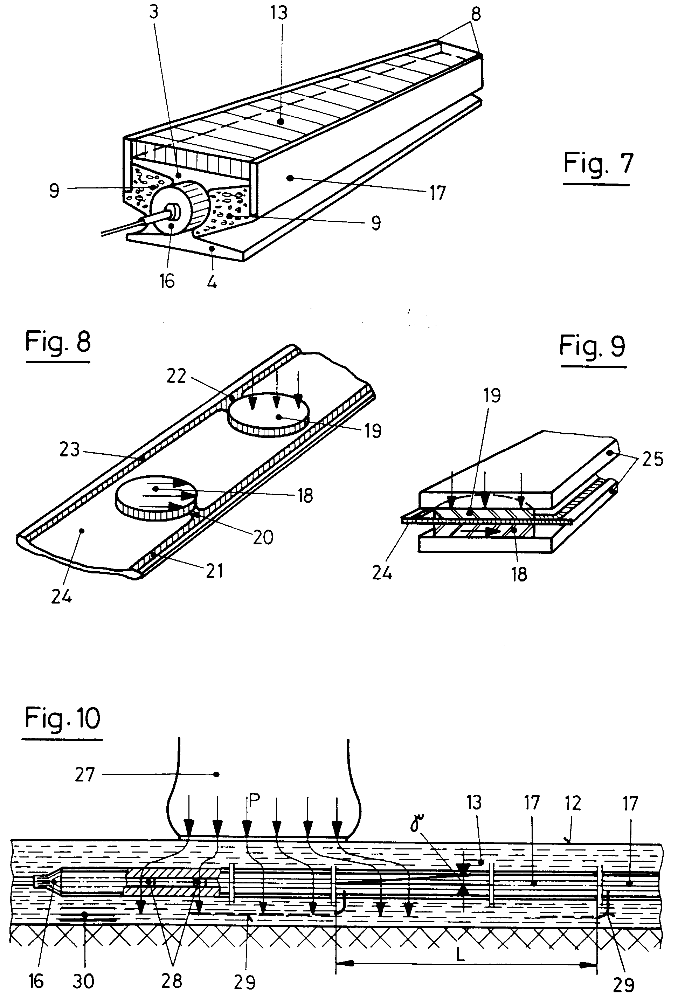

Fig. 3 zeigt den Rohrflansch-Aufnehmer 1 erfindungsgemäss in der Fahrbahnoberfläche 12 eingebaut. Dazu wird er vorkonfektioniert nach Fig. 7 angeliefert. Nachdem der einbaufertige Aufnehmer 17 in der Einbaunute 11 positioniert ist, wird die Einbettmasse 10 eingefüllt und mit der Fahrbahnoberfläche 12 bündig nivelliert.

Der beim Produzenten auf Lager gelegte einbaufertige Aufnehmer 17 besteht aus dem Rohrflansch-Aufnehmer 1, den Rollkraft-Isoliermassen 8, die in eingebautem Zustand bis an die Fahrbahnoberfläche reichen und den seitlichen Isolierschaumteilen 9, welche den Rohrteil 2 von voraus- und nacheilenden Rollkräften R isolieren. Diese seitlichen Rollkräfte R nehmen mit der Fahrbahntiefe ab, am grössten sind sie direkt unter der Fahrbahnoberfläche, so dass der Kraft-Einleitflansch 3 mit der Fahrbahnausgussmasse 13 bis an die Fahrbahnoberfläche 12 von jeglichen Seitenrollkräften R geschützt ist. Die Rollkraft-Isoliermassen 8 können z.B. aus einem Silikongummiband bestehen. Die zwischen die Rollkraft-Isoliermassen 8 eingegossene Fahrbahnausgussmasse 13 soll möglichst ähnliche mechanische Eigenschaften wie die Fahrbahnoberfläche 12 aufweisen. Die Einbettmasse 10 umgreift den Kraft-Verankerungsflansch 4 und verbindet ihn mit dem Fahrbahngrund und positioniert den einbaufertigen Aufnehmer 17 in der gewünschten Lage. Die Breite B des Kraft-Einleitflansches 3 ist so optimiert, dass mit einem einzigen Rohrteil 2 auszukommen ist.

Es liegt aber im Rahmen der Erfindung, die Breite B des Kraft-Einleitflansches so zu vergrössern, dass zwei oder mehrere Rohrteile 2 nebeneinander angeordnet werden können und mit dem Flansch verbunden sind. Die Einbettmasse 10 und die Fahrbahnausgussmasse 13 bestehen üblicherweise aus Sand-Kunststoffgemischen, deren Zusammensetzungen den mechanischen Eigenschaften der Fahrbahnmaterialien angepasst werden können. Als besonders vorteilhaft hat sich eine Mischung von 75% Aralditgiessharz mit 25% Quarzsand erwiesen.

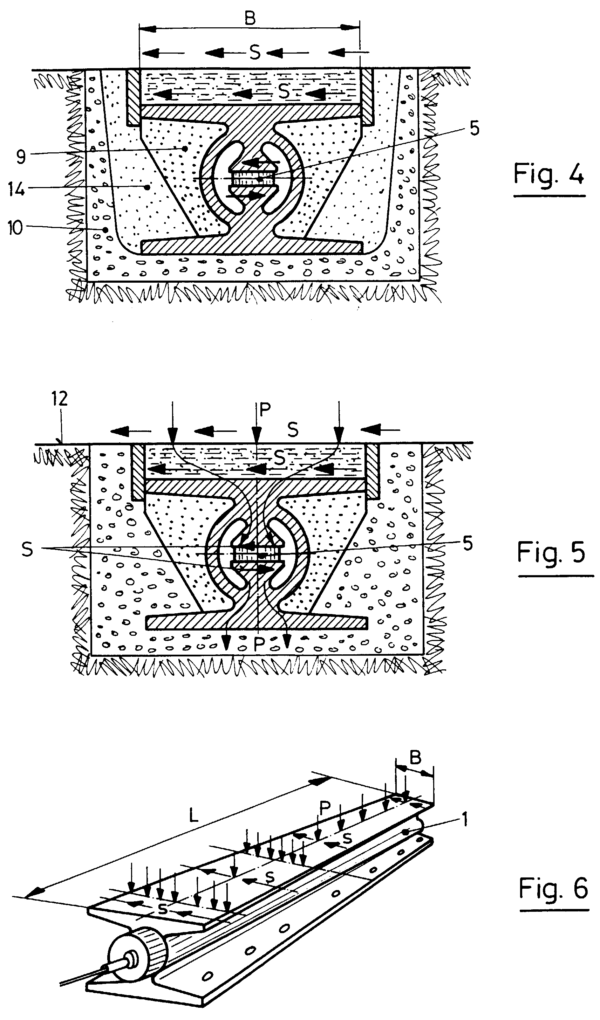

In Fig. 4 ist dieselbe erfindungsgemässe Aufnehmer-Anordnung wie in Fig. 3 dargestellt. In der Messanordnung 5 sind jedoch auf Schub empfindliche Piezoplatten eingebaut, die genau dieselben Abmessungen haben. Damit eröffnen sich neue Messmöglichkeiten. Zwischen dem Rohrteil-Isolierschaum 9 und der Einbettmasse 10 ist als Variante eine Zwischenmasse 14 angeordnet, die ebenfalls ein Sand-Kunststoffgemisch sein kann.

In Fig. 5 ist nochmals eine erfindungsgemässe Aufnehmer-Anordnung nach Fig. 3 dargestellt. In der Messanordnung 5 sind jedoch schubempfindliche und druckempfindliche Piezoplatten gleicher Abmessungen eingebaut. Damit können Gewichts- und Schubkomponenten separat gemessen werden, was zusätzliche Anwendungsmöglichkeiten eröffnen wird.

In Fig. 6 ist der Rohrflansch-Aufnehmer 1 nach Montage der Messanordnung 5 gezeigt. Der Aufnehmer kann in dieser Form auch für andere Zwecke z.B. in der Automation verwendet werden.

In Fig. 7 ist der für Fahrbahneinbau vorgesehene Rohrflansch-Aufnehmer 1 konfektioniert als einbaufertiger Aufnehmer 17 gezeigt. Die Fahrbahnausgussmasse 13 ist zwischen die beiden Rollkraft-Isoliermassen 8 fest vergossen und die Rohrteil-Isolierschaummassen 9 sind ebenfalls montagefest angebracht. Als Variante ist eine zentrische Anschlusspartie 16 gezeigt. Für Hintereinander-Einbau sind jedoch aussenliegende Anschlussleitungen besser, wie noch in Fig. 10 gezeigt wird.

In Fig. 8 ist ein Teil einer Messanordnung 5 gezeigt, bei welcher Piezoschubplatte 18 und Piezodruckplatte 19 hintereinander auf der Isolierplatte 24 angeordnet sind. Diese ist mit Leitpfaden 23 für Druckplatten 19 und Leitpfaden 21 für Schubplatten 18 versehen.

In Fig. 9 ist ein Teil einer Messanordnung 5 gezeigt, bei welcher Piezoschubplatte 18 und Piezodruckplatte 19 übereinander angeordnet sind. Dazwischen ist die Isolierplatte 24 angeordnet, die beidseitig mit Leitpfaden versehen ist. Vorteilhafterweise wird die Piezoplattenanordnung zwischen zwei Führungsschienen 25 angeordnet, die mechanisch verspannt sind oder mit isolierenden Klebern zu einer Montageeinheit verbunden sind, die auf einfache Weise in den geöffneten Rohrteil 2 eingeschoben werden kann.

Fig. 10 zeigt einen Fahrbahn-Querschnitt mit einer erfindungsgemässen Aufnehmeranordnung. Die einbaufertigen Aufnehmerelemente 17 werden eines neben das andere gelegt mit möglichst geringem Abstand. Die Anschlussleitungen 29 der Aufnehmer 17 werden an je einem Ende radial nach aussen und in der Vergussmasse zum Sammelkanal 30 geführt. Prinzipiell ist aber auch eine zentrische Anschlusspartie 16 möglich.

Die aussen liegenden Einzelleitungen bis zum Verteilkasten ermöglichen einen Standard-Aufnehmer der Länge L, der in sich dicht abgeschlossen ist und zu beliebigen Längen kombinierbar ist. Damit kann das Messsystem auch einfach einer eventuell gekrümmten Fahrbahnoberfläche angepasst werden, indem die Achsen unter dem Winkel $\gamma$ verändert werden.

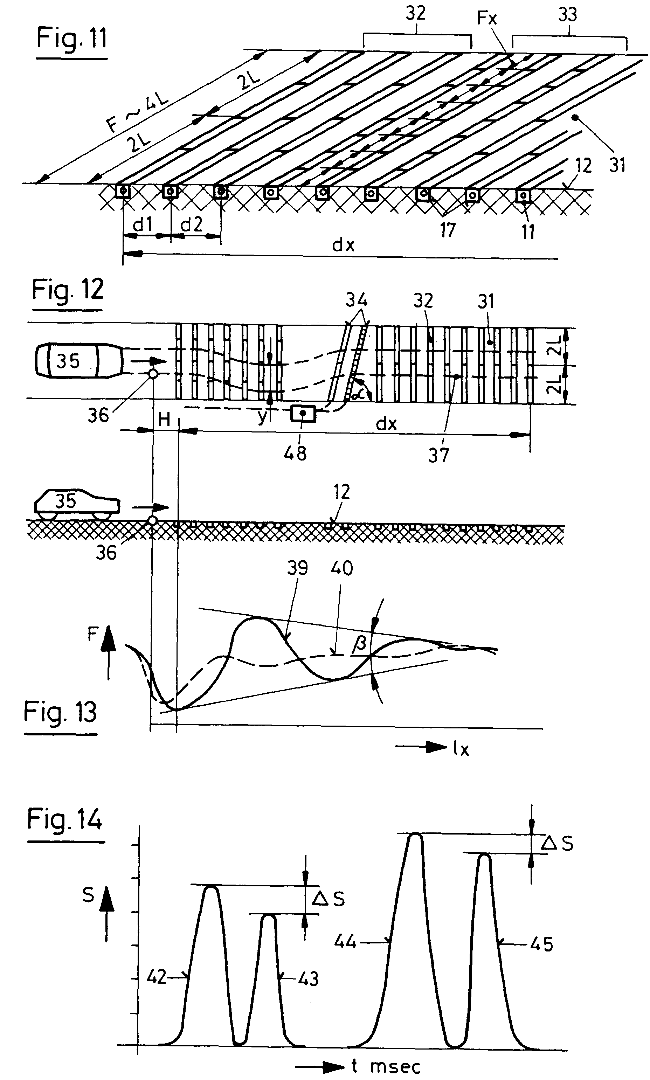

Fig. 11, 12, 13, 14 zeigen Anlage und Auswertung einer Fahrzeugteststrecke, die eine Mehrzahl z.B. zehn oder mehr Aufnehmer 17 in optimierten Abständen d1, d2 enthält und damit zu einer Prüfstrecke 31 aufgebaut wurde, die z.B. online an das Fliessband einer Automobilfirma angeschlossen werden kann. Damit können die fahrdynamischen Eigenschaften eines Fahrzeugs in einer einzigen Ueberfahrt kontrolliert werden, ohne dass im Fahrzeug ein einziges zusätzliches Messinstrument montiert wurde.

Fig. 11 zeigt die Prüfstrecke 31 in Schnittansicht. Unter der Annahme, dass die einbaufertigen Aufnehmer eine Standardlänge L = 1m aufweisen, wird eine normale Fahrbahnbreite etwa vier einbaufertige Aufnehmer in einer einzelnen Einbaunute 11 benötigen. Damit kann die Fahrbahnbreite zusätzlich in vier Abschnitte unterteilt werden. Wie in Fig. 8 und 10 dargestellt, könnte ohne weiteres innerhalb des Aufnehmers eine weitere Unterteilung durch separate Beschaltung der Piezoplattenpaare 28 durchgeführt werden, wodurch die Fahrbahnbreite in zehn oder mehr Unterabschnitte unterteilt werden kann. Damit ergeben sich weitere Messmöglichkeiten. Es können aber Einbaunuten 11 mit Gruppen von Normaufnehmern 32 und solche mit Feinunterteilung 33 angeordnet werden.

Fig. 12 zeigt eine Prüfstrecke 31, die zu Beginn ein Hindernis 36 aufweisen kann, auf welches z.B. Steuerung und Federung reagieren.

Einer oder mehrere Aufnehmer 34 sind unter einem Winkel $\alpha$ leicht schräg in die Fahrbahn verlegt, wodurch sich zeitlich versetzte Kraftsignale und damit eine Reihe zusätzlicher Informationen ergeben.

So kann mit zwei Aufnehmern 34 folgendes gemessen werden: Einzelradkraft, Gewicht (Summe), Geschwindigkeit, Achsabstände, Gewichtsverteilung links-rechts, Spurlage und -breiten, Doppelrädererkennung, automatische Querempfindkeitsmessung.

So ermöglicht die Schrägstellung eines Messkanals die Kalibrierung des Empfindlichkeitsfaktors über die Fahrbahnbreite F. Infolge Rillenbildung in, der Fahrbahn können erhebliche Messfehler entstehen, die entdeckt und durch Massnahmen verhindert werden müssen. Eine Kalibrierung der Querempfindlichkeit deckt solche Fehler auf. Dazu wird mit dem Kalibrierfahrzeug, dessen linkes und rechtes Radgewicht bekannt ist, in mehreren Ueberfahrten die ganze Fahrbahnbreite in Schritten überdeckt. Bei jeder weiter verschobenen Ueberfahrt werden die Einzelradgewichte links - rechts verglichen. Verbleiben die Einzelgewichte über die Breite F im Toleranzrahmen, so ist noch keine Fahrbahnabnützung oder Verformung entstanden. Diese Kalibrierung ist natürlich nur mit unterteilten Messkanälen 33, 34 möglich, welche die Messsignale der linken und rechten Seite separat erfassen.

Die Spurlagen eines Fahrzeuges können natürlich statt mit schräggestellten Sensoren und Laufzeitmessungen auch mit den rechtwinklig zur Fahrbahn eingebauten Aufnehmern mit entsprechender Feinunterteilung erfasst werden.

Für die vorgenannten Messgrössen ist natürlich das Hindernis 36 nicht notwendig. Dieses kann aber zur Prüfung der Fahrwerksdynamik dienen, indem es Schwingungen anregt.

Fig. 13 zeigt eine Auswerte-Variante der Gewichtskomponenten, bei welcher die Wirkung der Fahrzeugaufhängung, der Stossdämpfer und der Lenkung geprüft werden. Ein normaler Ausschwingvorgang 40 kann z.B. auf einfache Weise mit einem unbefriedigend gedämpften Vorgang 39 verglichen werden, der ein weit höheres Dämpfungsdekrement $\beta$ aufweist.

Eine wesentliche Erweiterung der Messmöglichkeiten ergibt der Einbau von Aufnehmern nach Fig. 4 oder 5. Die zusätzliche Messung der Schubkomponenten, sei es für Brems-, Start- oder Beschleunigungsvorgänge, bringt der Prüfstrecke 31 eine neue Dimension.

Fig. 14 zeigt eine Auswerte-Variante der Schubkomponenten z.B. bei Brems- oder Beschleunigungs-Vorgängen Dabei ist 42 die Schubkomponente des rechten Vorderrads, 43 diejenige des linken Vorderrads und 44 jene des rechten Hinterrads und 45 des linken Hinterrads.

Aus den angedeuteten Möglichkeiten ist ersichtlich, dass eine erfindungsgemässe Prüfstrecke 31 Routine-Abklärungen an beliebigen Fahrzeugen rasch durchführen kann. Eine komplette fahrdynamische Prüfung bezüglich Stabilität, Lenkung, Aufhängung, Brems-Startverhalten lässt sich mit der nötigen Software in einer einzigen Ueberfahrt erfassen, ohne dass ein Instrument im Fahrzeug selber montiert ist.

Die gleichzeitige Messung von Schub- und Gewichtskomponenten ermöglicht die Ermittlung des Reibungskoeffizienten

$$\rho = \frac{\Delta P}{\Delta S},$$

wodurch sich weitere sehr wichtige Auswertemöglichkeiten der erfindungsgemässen Anordnung ergeben.

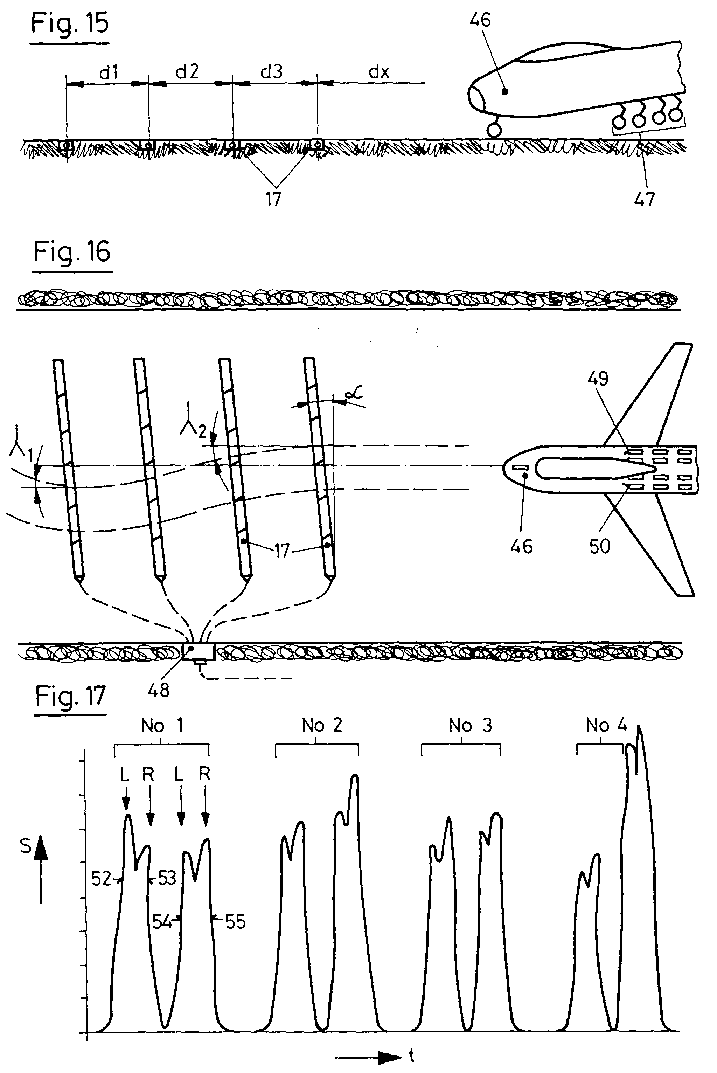

In den Fig. 15, 16 und 17 ist eine weitere erfindungsgemässe Anwendung für Landepisten gezeigt, die ja auch Fahrbahnen sind und das Flugzeug auf dem Boden ebenfalls ein Fahrzeug ist. Der Landeteil der Piste kann ähnlich ausgerüstet werden wie eine Prüfstrecke 31 nach Fig. 11 und 12.

Fig. 15 zeigt eine vereinfachte Anlage z.B. mit nur vier Aufnehmern 17, die in optimierten Abständen d1, d2, d3 mit dem Abstand dx vom Pistenanfang angeordnet sind. Das Flugzeug 46 ist eben am Beginn der Touchdown-Phase, wo das Hauptfahrwerk 47 Bodenberührung bekommt. Als Beispiel ist ein achträderiges Doppelrad-Fahrwerk vorgesehen.

Fig. 16 zeigt die Anlage im Grundriss, wo die Aufnehmer mit einer Unterteilung versehen und in einem Winkel $\alpha$ angeordnet sind. Dank der Unterteilung, wie in Fig. 11 gezeigt, ist jede Abweichung der Bremsspur sofort erkennbar, also die Aenderungs- und Korrekturwinkel $\lambda_1$, $\lambda_2$, bei jeder Witterung und Tageszeit. Von diesen Abweichungen lassen sich eine Reihe von wichtigen Schlüssen auf das ABS-System ziehen.

In Fig. 17 sind die Bremsdiagramme der einzelnen Doppelräder gezeigt.
Die beiden Doppelspitzen No. 1 zeigen:

52 Bremsschub linkes Doppelrad von 50
53 Bremsschub rechtes Doppelrad von 50
54 Bremsschub linkes Doppelrad von 49
55 Bremsschub rechtes Doppelrad von 49

Aehnliche Diagramme ergeben die No. 2, No. 3 und No. 4 Doppelradgruppe. Je nachdem, ob die eingebaute erfindungsgemässe Aufnehmergruppe 17 mit Gewichts-, mit Schub- oder mit der Kombination ausgerüstet ist, lassen sich bei einem einzigen Landeanflug alle wichtigen Komponenten des Landevorganges überprüfen. Zusätzlich kann auch die Pilotenleistung durch die Lage des Touchdown und die eingesetzten Bremsmittel überprüft werden.

Von grossem Interesse ist auch der Zustand der Pistenoberfläche bezüglich Verunreinigungen durch Gummiabrieb, Oelflecken und Nässe. Dadurch kann der Bremsreibungskoeffizient $\rho$ entscheidend verändert werden. Die erfindungsgemässe Anordnung ermöglicht die Erfassung der Veränderung des Reibungskoeffizienten $\rho$ von Landung zu Landung, wodurch ein Monitoring des Pistenoberflächenzustandes möglich wird.

Die Erklärungen und die Figuren zeigen, dass die erfindungsgemässe Aufnehmer-Anordnung dank der Kombination von Gewichts- und Schubanteilen neue Anwendungsmöglichkeiten aufzeigt, die wesentliche neue Qualitäts- und Sicherheitsaspekte ermöglichen wird.

Währenddem die Gewichtserfassung bewegter Fahrzeuge ein mehrjähriges internationales Forschungsprojekt ist, bringt die erfindungsgemässe Kombination Gewichts-Schubmessung zum bereits bekannten Verkehrsmanagement mit Gewichts-Ueberwachung neue Anwendungen in der Fahrzeug-Qualitätsüberwachung wie auch in der Einhaltung von Verkehrssicherheits-Massnahmen.

Die gezeigten Beispiele lassen sich am einfachsten auf Basis der Piezoeffekte von Druck- und Schubplatten 18,19 realisieren. Diese Platten können sowohl aus Piezokeramik wie auch aus Einkristallen bestehen. Beste Resultate sind mit Quarzkristallplatten erreichbar, die auch eine quasistatische Kalibrierung zulassen. Zudem weisen Quarzkristalle keine Pyroeffekte auf, wie sie alle bisher verwendeten piezoelektrischen Systeme aufweisen. Plötzliche Gewitter oder wechselnde Sonnenbescheinung können schnelle Temperaturgradienten erzeugen, welche jedoch bei Quarzkristallen keine Signaländerung ergeben.

Ein weiterer grosser Vorteil der Quarzkristalle liegt in der Möglichkeit der quasistatischen Gewichts-Kalibrierung, indem ein Prüffahrzeug mit zuvor statisch gemessenen, also bekannten, Achsgewichten sehr langsam über die Aufnehmer-Anordnung fährt. Damit werden zusätzliche durch die Federung bedingte Schwingungen, deren Fehler bei Fahrgeschwindigkeiten über 1km/h, nicht zu unterdrücken sind, ausgeschlossen. Mit keramischen Piezoelementen ist diese quasistatische Kalibrierung nicht möglich.

Die Erfindung und deren Anwendungen beschränken sich jedoch nicht auf Piezoeffekte, es könnten auch andere wie z.B. kapazitive oder ohmsche Messanordnungen verwendet werden.

**Patentansprüche**

1. Hohlprofil-Aufnehmer (1) zum Einbau in Fahrbahnen zwecks Erfassung der Gewichte und/oder fahrdynamischen Reaktionen von Fahrzeugrädern mit einem Rohrteil (2), der in seinem Profilinnern eine Messanordnung (5) aufweist, die kraftschlüssig in Verbindung mit der Wand des Rohrteils (2) steht, dadurch gekennzeichnet, dass der Rohrteil (2) einen Krafteinleitungsflansch (3) aufweist, der flankierend zum Rohrteil (2) mit diesem so verbunden ist, dass eine Konzentration der Krafteinwirkungslinien (P, S) auf die Messanordnung (5) entsteht und damit eine mechanische Verstärkerwirkung erzielt wird.

2. Aufnehmer nach Anspruch 1, dadurch gekennzeichnet, dass der Krafteinleitungsflansch (3) eine plattenähnliche Form aufweist und dass zur Befestigung im Fahrbahngrund ein Kraft-Verankerungsflansch (4) auf der Gegenseite des Rohrteils (2) angebracht ist.

3. Aufnehmer nach Anspruch 1, dadurch gekennzeichnet, dass die Halterung der Messanordnung (5) durch eine Einschnürung mit dem Rohrteil (2) so verbunden ist, dass die elastische Länge des Rohrteils (2) so weit vergrössert wird, dass bei der Montage durch die Montageklemmkraft K eine genügend grosse elastische Oeffnung zum Einschieben der Messanordnung (5) entsteht, und dass nach Lösen der Montagekraft K eine luftspaltfreie Kompressions-Verbindung der Messanordnung (5) mit dem Kraft-Einleitungsflansch (3) und dem Kraft-Verankerungsflansch (4) vorhanden ist.

4. Aufnehmer nach einem der Ansprüche 1 bis 3, dadurch gekennzeichnet, dass der Kraft-Einleitungsflansch (3) mit einer Fahrbahnausgussmasse (13) versehen ist, die ähnliche mechanische Eigenschaften aufweist wie die übrige Fahrbahnoberfläche (12), und dass beidseitig eine Rollkraft-Isoliermasse (8) als Abgrenzung dient, die bis zur Strassenoberfläche (12) reicht und z.B. aus Silikongummi besteht.

5. Aufnehmer nach einem der Ansprüche 1 bis 4, dadurch gekennzeichnet, dass der Rohrteil (2) mit einem Rohrteil-Isolierschaum (9) so abgedeckt ist, dass die Unterseite des Kraft-Einleitflansches (3), der Rohrteil (2), wie auch ein Teil des Kraft-Verankerungsflansches (4) dicht verpackt sind und die so entstandene Einheit von Fabrikanten vorfabriziert und als einbaufertiger Aufnehmer (17) vorbereitet werden kann.

6. Aufnehmer nach einem der Ansprüche 1 bis 5, dadurch gekennzeichnet, dass der einbaufertige Aufnehmer (17) eine Fertiglänge L aufweist, die in einem günstig teilbaren Verhältnis zur Gesamtbreite der Fahrbahn (F) ist und mit separatem seitlichem Kabelanschluss, der dicht aus dem Rohrteil (2) herausgeführt ist, versehen ist und eine Länge bis zum Sammelkasten (48) aufweist.

7. Aufnehmer nach einem der Ansprüche 1 bis 6, dadurch gekennzeichnet, dass die Messanordnung (5) Piezokristalle (19) enthält, die nur auf Druck (P) empfindlich sind.

8. Aufnehmer nach einem der Ansprüche 1 bis 7, dadurch gekennzeichnet, dass die Messanordnung (5) Piezokristalle (18) enthält, die nur auf Schub (S) senkrecht zur Aufnehmerachse empfindlich sind.

9. Aufnehmer nach einem der Ansprüche 1 bis 8, dadurch gekennzeichnet, dass beide Kristalltypen (18,19) für Druck und Schub eingebaut sind.

10. Aufnehmer nach einem der Ansprüche 1 bis 9, dadurch gekennzeichnet, dass die Messanordnung (5) so modular aufgebaut ist, dass alle drei Wirkungsformen dieselben Einbaudimensionen aufweisen und somit wahlweise eingebaut werden können, so dass nur Gewichtsanteile, nur Schubanteile oder Gewichts- und Schubanteile auf die Fahrbahnoberfläche gemessen werden können.

**11.** Aufnehmer nach einem der Ansprüche 1 bis 10, dadurch gekennzeichnet, dass die piezoelektrischen Kristalle Einkristalle wie z.B. Quarzkristalle sind.

**12.** Aufnehmer nach einem der Ansprüche 1 bis 11, dadurch gekennzeichnet, dass die piezoelektrischen Kristalle aus Piezokeramiken bestehen.

**13.** Aufnehmer nach einem der Ansprüche 1 bis 12, dadurch gekennzeichnet, dass die Messanordnung (5) kapazitive und/oder ohmsche Elemente aufweist.

**14.** Anwendung des Aufnehmers nach einem der Ansprüche 1 bis 13, dadurch gekennzeichnet, dass die Aufnehmer (17) in Mehrfachanwendung zu einer Fahrzeugprüfstrecke (31) so zusammengeschaltet werden, dass das fahrdynamische Verhalten eines Prüffahrzeugs bezüglich Aufhängung, Steuerung, Brems- oder Startvermögen überprüft werden kann.

**15.** Anwendung des Aufnehmers nach einem der Ansprüche 1 bis 13, dadurch gekennzeichnet, dass die Aufnehmer (17) in Mehrfach-Anwendung in Landepisten eingebaut werden, insbesondere so, daß Seitenabweichungen $\lambda_1$ , $\lambda_2$ durch fehlerhafte ABS-Wirkungen, wie auch die Bremsschübe (52... 55) der Einzelräder der Fahrwerke (47) überprüfbar sind.

**16.** Anwendung des Aufnehmers nach Anspruch 9, dadurch gekennzeichnet, dass er zur Ermittlung des Reibungskoeffizienten $\rho$ der Fahrbahnoberfläche dient.

**17.** Anwendung des Aufnehmers nach einem der Ansprüche 1 bis 13, dadurch gekennzeichnet, dass durch Schrägstellung unter einem Winkel $\alpha$ eine zeitliche Unterscheidung der auf die linken und rechten Fahrzeugräder zurückgehende Messwerte ermöglicht werden.

**18.** Verfahren zum Kalibrieren des Aufnehmers nach einem der Ansprüche 1 bis 13, dadurch gekennzeichnet, dass gegebenenfalls die quasistatische Kalibrierbarkeit von Quarz-Piezokristallen dadurch ausgenützt wird, dass ein Prüffahrzeug mit bekannten Achsgewichten mit einer Geschwindigkeit von weniger als 1km/h über die Aufnehmer-Anordnung fährt, so dass alle federungsbedingten Schwingungseffekte unterdrückt sind und das statische Gewicht dem quasistatischen entspricht.

**19.** Verfahren zum Kalibrieren des Aufnehmers nach einem der Ansprüche 1-13, dadurch gekennzeichnet, dass durch Schrägstellung eines Messkanals unter dem Winkel $\alpha$ eine Kalibrierung der Empfindlichkeitsveränderung über die Fahrbahnbreite möglich ist, indem das Kalibrierfahrzeug mit bekannten Einzelachslasten mehrmals in Schritten von der linken Fahrbahnseite bis zur rechten Fahrbahnseite den Messkanal überfährt und die Signale der Einzelräder links und rechts verglichen werden.

**Claims**

1. Hollow section sensor (1) for installation in carriageways or runways, for detecting the weights and/or dynamic reactions of vehicle wheels using a tubular part (2) accommodating a measuring arrangement (5) inside it press-fitted against the wall of the tubular part (2), characterized by the tubular part (2) having a force introduction flange (3) joined tangentially to the tubular part (2) so that a concentration of the force action lines (P, S onto the measuring arrangement (5) results, producing a mechanical amplification effect.

2. Sensor according to Claim 1, characterized by the force introduction flange (3) having a platelike form, with a force anchoring flange (4) attached to the opposite side of the tubular part for fixing in the road bed.

3. Sensor according to Claim 1, characterized by the mounting of the measuring arrangement (5) being joined to the tubular part (2) by a constriction, so that the elastic length of the tubular part (2) is increased at assembly by the locking force K till a sufficiently large elastic opening for pushing in the measuring arrangement (5) results, and after releasing the locking force K a compressive join without air gap is obtained between the measuring arrangement (5) and the force introduction flange (3) and force anchoring flange (4).

4. Sensor according to Claims 1 to 3, characterized by the force introduction flange (3) having a roadway filling compound (13) with mechanical properties similar to those of the road surface (12), and serving to confine a rolling force insulation compound (8) at both sides up to the road surface (12), consisting of silicone rubber for example.

5. Sensor according to one of Claims 1 to 4, characterized by the tubular part (2) being covered with foam insulation (9) so that the underside of the force introduction flange (3), the tubular part (2) and part of the force anchoring flange (4) are packed tight, making a unit that can be prefabricated by the manufacturer and prepared as a sensor (17) ready for installation.

6. Sensor according to one of Claims 1 to 5, characterized by the sensor (17) ready for installation having a finished length L in a conveniently divisible ratio to the overall width (F) of the runway, and with separate lateral cable connection which is led out of the tubular part (2) sealed and extends in length up to the junction box (48).

7. Sensor according to one of Claims 1 to 6, characterized by the measuring arrangement (5) containing piezoelectric crystals (19) sensitive to pressure (P) only.

8. Sensor according to one of Claims 1 to 7, characterized by the measuring arrangement (5) containing piezoelectric crystals (18) sensitive only to shear (S) normal to the sensor axis.

9. Sensor according to one of Claims 1 to 8, characterized by being fitted with both crystal types (18, 19) for pressure and shear.

10. Sensor according to one of Claims 1 to 9, characterized by the measuring arrangement (5) being constructed modularly so that all three action embodiments have the same fitting dimensions and may thus be installed optionally, enabling weight components alone, shear components alone or weight and shear components on the road surface to be measured.

11. Sensor according to one of Claims 1 to 10, characterized by the piezoelectric crystals being monocrystals such as quartz.

12. Sensor according to one of Claims 1 to 11, characterized by the piezoelectric crystals consisting of piezoceramics.

13. Sensor according to one of Claims 1 to 12, characterized by the measuring arrangement (5) having capacitive and/or resistive elements.

14. Application of the sensor according to one of Claims 1 to 13, characterized by the sensors (17) in multiple application being interconnected to provide a vehicle testing run (31), so that the dynamic behaviour of a test vehicle can be investigated with regard to suspension, steering, braking or starting performance.

15. Application of the sensor according to one of Claims 1 to 13, characterized by the sensors (17) being installed in aircraft runways in multiple, so that in particular lateral deviations $\lambda_1$, $\lambda_2$ due to faulty anti-lock braking system actions, also reverse thrusts (52... 55) of the individual undercarriage wheels (47), can be verified.

16. Application of the sensor according to Claim 9, characterized by it serving to determine the coefficient of friction $\rho$ of the runway surface.

17. Application of the sensor according to one of Claims 1 to 13, characterized by the slanting by an angle $\alpha$ to make possible measured values differing in time from the left and right wheels of a vehicle.

18. Procedure for calibrating the sensor according to one of Claims 1 to 13, characterized by the amenability of quartz piezoelectric crystals to quasistatic calibration being utilized if necessary to run a test vehicle with known axle weights over the sensor arrangement at a speed below 1 km/h, so that all vibration effects due to the suspension are suppressed and the static weight corresponds to the quasistatic weight.

19. Procedure for calibrating the sensor according to one of the claims 1 to 13, characterized by a measuring channel being slanted with the angle $\alpha$ to enable calibration of the sensitivity variation across the road width, in that the calibration vehicle with known axle loads runs over the measuring channel several times shifting from the left to the right side of the runway, and the signals from the individual wheels left and right are compared.

**Revendications**

1. Capteur à profilé creux (1) destiné à être installé dans les chaussées à fin de saisir les poids et/ou les réactions dynamiques de roulage des roues de véhicule avec une partie tubulaire (2) dans laquelle est installé un aménagement de mesure (5) solidaire quant à la transmission des efforts avec les parois de la partie tubulaire (2), caractérisé en ce que la partie tubulaire (2) possède une bride d'introduction des efforts (3) qui est liée à la partie tubulaire (2) de manière à créer une concentration de lignes d'introduction des forces (P, S) sur l'aménagement de mesure (5) et donc, d'obtenir un effet d'amplification mécanique.

2. Capteur selon revendication de brevet 1 caractérisé en ce que la bride d'introduction des efforts (3) possède une forme semblable à une plaque et que la partie diamétralement opposée de la partie tubulaire (2) possède une bride d'ancrage (4) permettant sa fixation dans la chaussée de la route.

3. Capteur selon revendication de brevet 1 caractérisé en ce que le support de l'aménagement de mesure (5) est relié à la partie tubulaire (2) par un rétrécissement de telle manière que la longueur élastique de la partie tubulaire (2) se trouve tellement agrandie que lors du montage une force d'écrasement K occasionne une ouverture élastique suffisament grande pour permettre l'introduction de l'aménagement de mesure (5) et que lors du relachement de la force d'écrasement K une liaison en compression sans aucune fente d'air est assurée entre l'aménagement de mesure (5) avec la bride d'introduction des efforts (3) et la bride d'ancrage des forces (4).

4. Capteur selon l'une des revendications de brevet 1 à 3 caractérisé en ce que la bride d'introduction des efforts (3) est revêtue d'un enrobée (13) ayant les mêmes caractéristiques mécaniques que le reste de la surface de la route (12) et que de chaque côté, une masse d'isolement des forces de roulement (8) serve de limitation s'étendant jusqu'à la surface de la route (12) et qui peut être réalisée en caoutchouc au silicone.

5. Capteur selon l'une des revendications de brevet 1 à 4 caractérisé en ce que la partie tubulaire (2) est recouverte d'une mousse d'isolement du tube (9) de telle sorte que la partie inférieure de la bride d'introduction des efforts (3), la partie tubulaire (2) ainsi qu'une partie de la bride d'ancrage des forces (4) sont emballées hermétiquement et que l'ensemble ainsi constitué peut être préfabriqué par le fabricant et préparé comme capteur (17) prêt au montage.

6. Capteur selon l'une des revendications de brevet 1 à 5 caractérisé en ce que le capteur prêt au montage (17) possède une longueur finie L qui est dans un rapport facilement divisible par rapport à la largeur totale de la chaussée (F) et qui possède une connexion par câble latérale séparée sortant de la partie tubulaire (2) par un passage hermétique et dont la longueur est suffisante jusqu'au boîtier de jonctionnement (48).

7. Capteur selon l'une des revendications de brevet 1 à 6 caractérisé en ce que l'aménagement de mesure (5) comporte des cristaux piéziques (19) qui ne sont sensibles qu'en pression (P).

8. Capteur selon l'une des revendications de brevet 1 à 7 caractérisé en ce que l'aménagement de mesure (5) comporte des cristaux piéziques (18) qui ne sont sensibles qu'au cisaillement (S) normal à l'axe du capteur.

9. Capteur selon l'une des revendications de brevet 1 à 8 caractérisé en ce que le capteur comporte les deux types de cristaux (18, 19) pour pression et cisaillement.

10. Capteur selon l'une des revendications de brevet 1 à 9 caractérisé en ce que l'aménagement de mesure (5) est conçu de façon modulaire de telle sorte que toutes les trois variantes de sensibilité possèdent le même encombrement de montage et donc peuvent être installées alternativement l'une à la place de l'autre de sorte qu'il est possible de mesurer uniquement les composantes de poids, les composantes de cisaillement ou les composantes de poids et de cisaillement appliquées à la surface de la route.

11. Capteur selon l'une des revendications de brevet 1 à 10 caractérisé en ce que les cristaux piézo-élastiques sont des monocristaux comme p.ex. du cristal de quartz.

12. Capteur selon l'une des revendications de brevet 1 à 11 caractérisé en ce que les cristaux piézo-électriques sont constitués de céramique piézique.

13. Capteur selon l'une des revendications 1 à 12 caractérisé en ce que l'aménagement de mesure (5) possède des éléments capacitifs ou ohmiques.

14. Mise en oeuvre du capteur selon l'une des revendications de brevet 1 à 13 caractérisée en ce que les capteurs (17) peuvent être connectés ensemble en utilisation multiple sur une piste d'essais (31) de manière à ce que le comportement dynamique d'un véhicule d'essais en mouvement puisse être vérifié quant à sa suspension, sa direction, ses capacités de freinage ou de démarrage.

15. Mise en oeuvre du capteur selon l'une des revendications de brevet 1 à 13 caractérisée en ce que les capteurs (17) peuvent être intégrés, en application multiple, dans des pistes d'atterrissage, en particulier de manière à ce que les écarts latéraux $\lambda 1$, $\lambda 2$ dûs aux réactions erronnées de l'ABS, ainsi que les cisaillement dûs au freinage (52 ... 55) des diverses roues du train d'atterrissage (47) puissent être vérifiés.

16. Mise en oeuvre du capteur selon revendication 9, caractérisée en ce qu'il sert à la détermination du coefficient de frottement $\rho$ de la surface de la piste.

17. Mise en oeuvre du capteur selon l'une des revendications 1 à 15 caractérisée en ce que, le positionnement en biais sous un angle $\alpha$ permette un décallage dans le temps pour différencier les valeurs de mesure relevant des roues gauches ou droites de véhicule.

18. Procédé d'étalonnage du capteur selon l'une des revendications de brevet 1 à 13 caractérisé en ce que, selon le cas soit utilisée la propriété d'étalonnage quasi-statique des cristaux en quartz piézique en utilisant un véhicule dont les poids par essieu sont connus et qui passe à une vitesse inférieure à 1 km/h par dessus l'aménagement de capteurs de façon à éviter tous les effets d'oscillation dûs aux amortisseurs et que le poids statique corresponde bien à celui des conditions quasi-statiques.

19. Procédé d'étalonnage du capteur selon l'une des revendications 1 à 13 caractérisé en ce que, la mise en biais d'un canal de mesure sous un angle $\alpha$, autorise un étalonnage de la variation de la sensibilité au travers de la largeur de la piste en faisant passer le véhicule d'étalonnage dont les charges par essieu sont connues plusieurs fois sur le canal de mesure en balayant toute la largeur de la piste du bord gauche jusqu'au bord droit et en comparant les signaux des diverses roues gauches et droites.

Fig. 1

Fig. 2

Fig. 3

Fig. 4

Fig. 5

Fig. 6

## Fig. 7

## Fig. 8

## Fig. 9

## Fig. 10

Fig. 11

Fig. 12

Fig. 13

Fig. 14

## Fig. 15

d1     d2     d3     dx

46

17

47

## Fig. 16

$\lambda_1$

$\lambda_2$

$\alpha$

17

46    50

49

48

## Fig. 17

No 1      No 2      No 3      No 4

L   R   L   R

S

52   53

54   55

t